# EUROPEAN PATENT APPLICATION

(11) **EP 1 677 001 A2**
(43) Date of publication of application: **05.07.2006**
(21) Application number: 05381058.6
(22) Date of filing: 15.12.2005
(51) Int. Cl.: F03D 1/00, F03D 11/04

(54) **System for removing the cover roof from a wind turbine**

(30) Priority: 15.12.2004 ES 200403112
(71) Applicant: Gamesa Eolica, S.A. (Sociedad Unipersonal), 31013 Pamplona (Navarra) (ES)
(72) Inventor: José Ignacio, Llorente González, 31013 Pamplona (ES); Jesús, Zaldua Lasa, 31013 Pamplona (ES)

(57) **Abstract**

System for removing the cover roof from a wind turbine which includes the following steps: the assembly of an elevator and a boom on the rail beams of the frame forming the nacelle, the lifting of the cover roof, its lengthways movement and 90° turn. In this position the roof is anchored to a boom mounted on the rail beams, which turning on its axis separate the roof from the nacelle and next proceed to lowering it to the ground.

The are two tools used to remove the cover roof: a tool capable of hoisting, moving and turning the nacelle cover, and an other tool for its lowering. Both tools are anchored to the rail beams of the nacelle.

## Description

**Field of the Invention.**

This invention refers to a system for removing the cover roof that covers the main body of the wind turbine and which is known as the nacelle. The system is based on external parts to the wind turbine components that are integrated into the nacelle structure to form a method of removing said cover roof and lowering it to the ground.

This is particularly applicable to maintenance work on the commercial wind turbines currently on the market.

**Background to the Invention.**

One of the most important factors during wind turbine maintenance work is the cost of hiring cranes capable of moving the different heavy parts forming the inside of the wind turbine nacelle. The search for self-supporting parts that may affect maintenance without the need for large cranes is a constant challenge of engineering and design.

To be able to carry out maintenance work on wind turbines, the initial step of removing the cover roof must be completed in order to release the nacelle so that any parts inside can be repaired or replaced. There are few known inventions involving the removal of the cover roof to leave the wind turbine parts accessible, although some references are known.

Hence, Patent WO 9206295 describes nacelle casing that opens in half using a hydraulic mechanism so that it does not have to be lowered, since when folded it does not hinder maintenance work and the removal of different components through the top of the wind turbine.

In order to effectively solve any shortfalls on existing wind turbines regarding their maintenance, the system for the removal of the cover roof without the need to use large cranes, the subject of this invention, has been developed.

**Description of the Invention.**

Many wind turbine nacelles used nowadays are made up of a main frame comprising a combination of horizontal and vertical beams that rest on the base of the nacelle. The higher horizontal beams on this structure, known as rail beams, are well positioned to house and withstand certain parts of the wind turbine or to act as a support for the wind turbine casing itself. Based on these rail beams and the light tools used on them, a procedure is established to remove the casing of the nacelle to make maintenance work easier.

The invention seeks to use a tool capable of hoisting, moving and turning the nacelle, preparing it for its lowering stage. The tool also forms part of this invention, with its characteristic securing, lifting, turning and moving parts.

The invention also seeks to use a boom capable of withstanding the casing, turning it over and lowering it to the ground (or the opposite operation, hoisting and putting it back).

Lastly, the invention also seeks to establish a procedure to carry out the appropriate steps for lowering the casing: the assembly of an elevator and a boom on the rail beams of the frame forming the nacelle, the lifting of the cover roof, its lengthways movement and 90° turn using the lifting tool and its lowering using the boom.

The following advantages can be obtained from the above. The cover roof can be removed without the need for external, costly cranes that are difficult to use on complex land. The parts used to move and subsequently lower the cover roof are anchored to the rail beams on the nacelle structure. Lastly , a method is established that adapts to the space available to be able to carry out the maintenance work.

For better understanding, a sheet of diagrams is attached which illustrate a practical case regarding the implementation of this invention.

**Brief description of the drawings.**

Figure 1 is a perspective view of the casing handling tool, showing all its parts.

Figure 2 involves details of the lifting part as a cross-section along its transversal axis.

Figure 3 shows a view of the casing handling tool as it is working.

Figure 4 is a view of the boom mounted on the rail beams.

Figure 5 is a side view of the wind turbine, where the side wall is cross-sectioned to show the location of the handling tool. The original layout of the casing before lifting and moving is shown by the dotted line.

Figure 6 is a view of the top of the wind turbine with the casing removed and turned 90°. The dotted lines show the original layout and an intermediate step as it turns.

Figure 7 is a view of the top of the wind turbine with the casing secured by the boom and the turn being made for moving. The dotted line shows the casing before it is turned.

**Description of preferred implementation.**

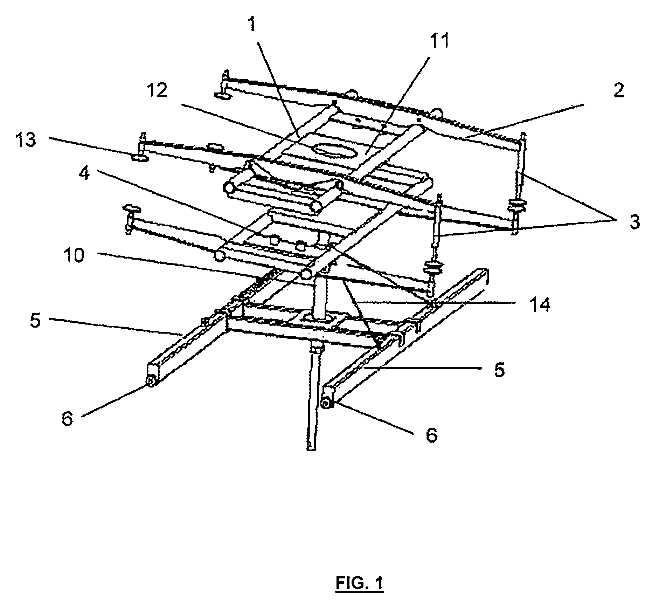

As indicated in Figure 1, the handling tool consists of padded sheets (1) on which joists (2) with supports (3) on each end are mounted. The padded sheets (1) are responsible for pressing the casing and securing it transversally. Joists (2) are fitted perpendicular to the sheets, which have adjustable supports (3) on their ends to secure the casing lengthways. These two parts comprise the casing securing system and are combined with the lifting mechanism (10) made up of a mechanical or hydraulic jack supported on beams (5) that can move thanks to the wheels (6) fitted on their ends.

The padded sheets (1) are made up of two cylindrical bars connected to each other by crossbeams (4) that pull out at each end over a surface area that is widest in the intermediate area (11). The upper padded sheet (1) has an intermediate area (11) with a pass hole (12) for tool assembly. The joists (2) are attached to the padded sheets (1) using a securing system which is easy to mount and dismantle.

The joists (2) have adjustable supports (3) at the ends that pull out lengthways and end in duly padded support disks (13). The lifting mechanism (10) that crosses the base structure made up of a combination of H-shaped beams (5) extends from the lower padded sheet. The four free ends of the beams (5) are fitted with wheels (6) and reinforcement strips (14) anchored to the lifting mechanism.

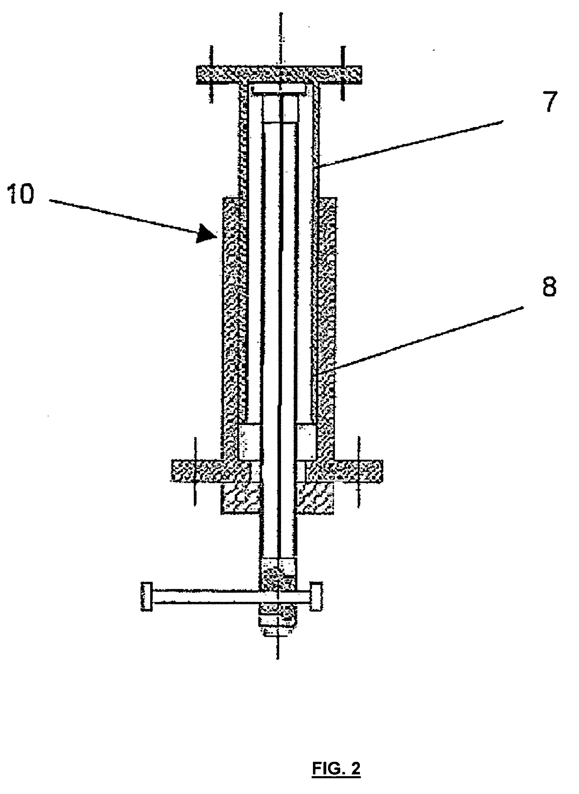

Figure 2 shows the lifting mechanism (10) made up of two bodies: a top one (7) and a lower one (8) that insert into each other to allow for relative sliding between them. This mechanism is fitted with a mechanical or hydraulic jack (4) to lift it and a turning mechanism to pivot the upper body (7), keeping the lower body stable (8).

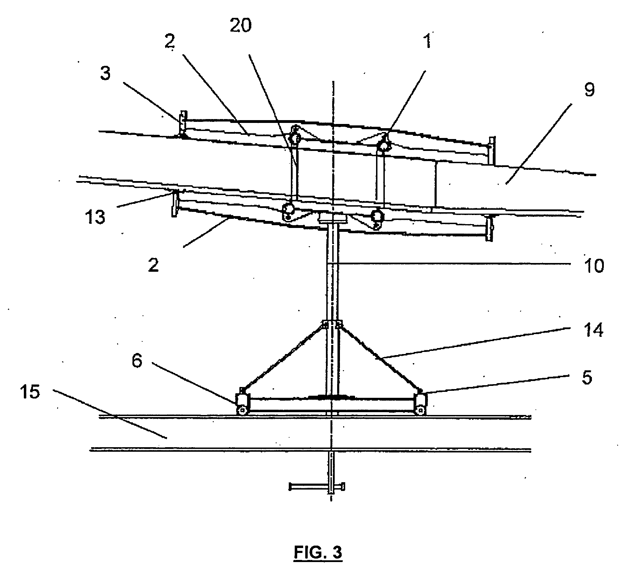

Figure 3 shows the handling tool mounted on the rail beams (15) forming the general frame and secured to the nacelle casing (9) that, according to the implementation shown, has a slight step at the top right to avoid discontinuity using the corresponding adjustable supports (3) on the ends of the joists (2). The lower and upper sheets are secure using connecting parts (20) from the crossbeams on their ends (4). These connecting parts cross the casing (9) through holes in its surface.

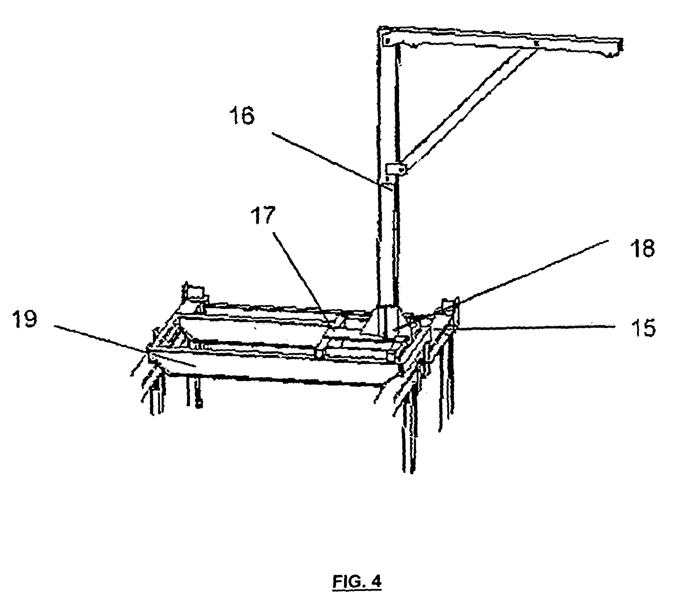

Figure 4 shows the lifting tool made up of a boom (16) anchored to a combination of H-shaped crossbeams (17), the base of the boom (18) resting on the central crossbeam. This combination of beams rests on an overhead crane (19) to enable the assembly to be moved along its longer sides. The overhead crane (19) is anchored onto the rail beams (15) forming the nacelle frame. The boom (17) can turn on its axis.

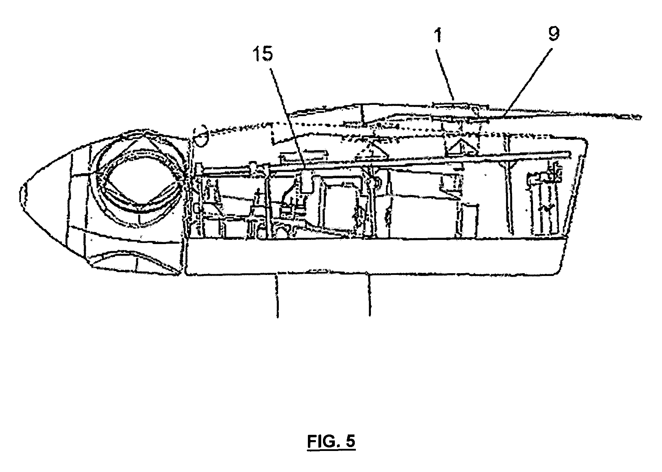

As indicated in Figures 5, 6 and 7, the first stage in removing the cover roof is to fit the aforementioned handling tool onto the rail beams (15). The padded sheets (1) are then mounted to press the casing (9) transversally, which are fitted with joists (2) and supports (3) which are adjustable lengthways. Once the casing (9) is secure, it is lifted using the lifting mechanism (10) and moved lengthways thanks to the wheels (6) on the ends of the beams (5) that form the H-shaped base of the tool.

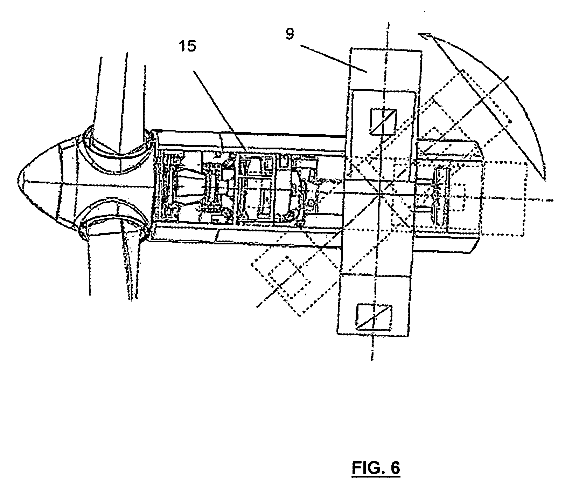

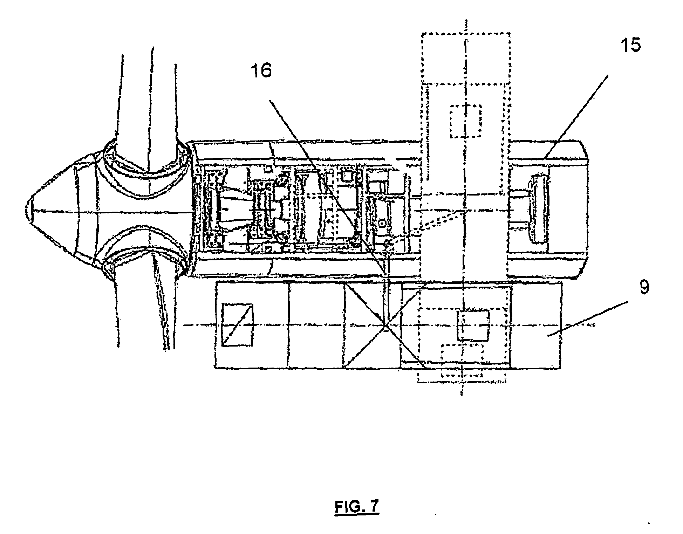

Figure 6 shows how the handling tool turns the casing (9), leaving it perpendicular to its standby location. The lifting and lowering tool (16), which is anchored to the overhead crane (19), is then mounted. The crossbeams (17) forming the base of the boom (16) can move lengthways over the overhead crane (19) to allow the casing to be lowered (9) on one side or another, as indicated in Figure 7.

## Claims

1. System for removing the cover roof of a wind turbine of those made up of a hollow, rectangular nacelle housing the different parts and covered by an upper casing or cover roof, **characterised by** the fact that it is fitted with a) a handling tool made up of: - padded sheets (1) on which joists (2) are mounted, the ends of which are fitted with supports (3) and - a lifting mechanism (10), comprising a mechanical or hydraulic jack that is supported on H-shaped beams (5); the four free ends of the beams (5) are fitted with wheels (6) and reinforcement strips (14) anchored to the lifting mechanism (10) b) a lifting and lowering tool, made up of: - a boom (16) that can turn on its axis, anchored on a combination of H-shaped crossbeams (17). The base of the boom (18) rests on the central crossbeam and - an overhead crane (19) that houses the aforementioned crossbeams and that allows the assembly to be moved along its longer sides c) rail beams (15) onto which the handling tool and the lifting and lowering tool is anchored.

2. System for removing the cover roof from a wind turbine according to claim 1, **characterised by** the fact that removal involves rail beams formed by the nacelle frame, a handling tool mounted on the rail beams and a lifting device mounted on the rail beams, which are implemented in the following stages: - the first stage is to fit the handling tool on the rail beams (15) and secure the casing (9). The casing (9) is then lifted using the lifting mechanism (10) and moved lengthways towards the opposite end of the rotor before the handling tool turns the casing (9), leaving it perpendicular to its standby location - in the second stage, the boom (18) is anchored to the base structure (19) on the corresponding rail beams (15), the casing is secured (9), the assembly is turned 90° and it is then lowered.

3. System for removing the cover roof from a wind turbine according to claim 1, **characterised by** the padded sheets (1) pressing the casing and securing it transversally, the joists (2), with adjustable supports (3) at their ends, secure the casing lengthways.

4. System for removing the cover roof from a wind turbine according to claim 1, **characterised by** the fact that the padded sheets (1) are made up of two cylindrical bars connected to each other by crossbeams (4) that pull out at each end over a surface area that is widest in the intermediate area (11).

5. System for removing the cover roof from a wind turbine according to claim 1, **characterised by** the fact that the lower and upper sheets are secured by connecting parts (20) from the crossbeams on their ends (4), crossing the casing (9) through the holes in it.

6. System for removing the cover roof from a wind turbine according to claim 1, **characterised by** the fact that the joists (2) are attached to the padded sheets (1) using a securing system which is easy to mount and dismantle.
